# EUROPÄISCHE PATENTSCHRIFT

(11) **EP 0 822 621 B1**
(45) Veröffentlichungstag und Bekanntmachung des Hinweises auf die Patenterteilung: **07.06.2000**
(21) Anmeldenummer: 97109449.5
(22) Anmeldetag: 11.06.1997
(51) Int. Cl.: H01R 13/719, B60R 16/02, H01R 12/16

(54) **Vorrichtung zum elektrischen Anschluss eines Gerätes, insbesondere eines Autoradios, in einem Kraftfahrzeug**
Device for electrically connecting of an apparatus, particularly an automobile radio, in a motor vehicle
Dispositif de connexion électrique d'un appareil, en particulier d'une autoradio, dans un véhicule automobile

(30) Priorität: 29.07.1996 DE 19630503
(43) Veröffentlichungstag der Anmeldung: 04.02.1998
(73) Patentinhaber: ROBERT BOSCH GMBH, 70442 Stuttgart (DE)
(72) Erfinder: Wolkewitz, Klaus, 31141 Hildesheim (DE)

(56) Entgegenhaltungen:
- EP-A- 0 275 496
- DE-A- 4 014 250
- US-A- 4 063 683

## Beschreibung

### Stand der Technik

Die Erfindung geht von einer Vorrichtung nach der im Oberbegriff des Anspruchs 1 angegebenen Gattung aus.

Aus der EP 0 275 496 ist bereits eine Vorrichtung zum elektrischen Anschluß eines Autoradios in einem Kraftfahrzeug bekannt. Die Vorrichtung umfaßt zwei Baugruppen und einen Distanzrahmen. In der ersten Baugruppe, welche aus einer rechteckigen Grundplatte und einem Rahmen besteht und als Spritzgußteil gefertigt ist, sind Flachkontakte zum Anschluß an im Kraftfahrzeug vorhandene Leitungen und Steckvorrichtungen vorgesehen. Die Flachkontakte sind über eine mit der Grundplatte verbundene Leiterplatte mit im Randbereich der Grundplatte angeordneten Messerkontakten verbunden. Beim Zusammenbau der Anschlußanordnung greifen die Messerkontakte in Kontakfedern der zweiten Baugruppe ein. Die Kontaktfedern wiederum weisen Lötfahnen auf, die mit einer auf der dem Radio zugewandten Seite der zweiten Baugruppe angeordneten weiteren Leiterplatte verlötet sind. Mit der weiteren Leiterplatte sind Flachbahnleitungen verbunden, welche in das Innere des Autoradios geführt sind und mit der Schaltung des Autoradios verbunden sind. Die Baugruppen bilden zusammen mit einem Distanzrahmen die Anschlußanordnung, welche über Klammern zusammengehalten wird und mit einer Schraube an einem Seitenteil des Autoradios befestigt wird. Nachteilig bei diesem Stand der Technik ist, daß zum Anschluß des Autoradios eine mehrteilige Vorrichtung mit zahlreichen Kontaktvorrichtungen erforderlich ist, welche die Herstellungskosten vergrößert und beim Anschluß des Gerätes nicht leicht zu handhaben ist. Es müssen drei Teile über zahlreiche Klammern miteinander verbunden werden und anschließend mit dem Gerät verschraubt werden, wobei die aus mehreren Teilen bestehende, innerhalb der Kontur des Autoradios untergebrachte Vorrichtung viel Platz in Anspruch nimmt. Der zusätzliche Platzbedarf wird insbesondere für die zwischen dem Seitenteil des Autoradios und dem ersten Bauteil eingesetzte zweite Baugruppe sowie die Verbindungsmittel zum Anschluß der zweiten Kontaktvorrichtungen an die im Gehäuseinneren vorgesehene Grundleiterplatte des Gerätes benötigt. Darüber hinaus besteht der Nachteil, daß bei der Vielzahl der miteinander verbundenen Kontaktvorrichtungen Störungen bei der Übertragung elektrischer Signale nicht ausgeschlossen werden können.

### Vorteile der Erfindung

Die erfindungsgemäße Vorrichtung zum elektrischen Anschluß eines Gerätes in einem Kraftfahrzeug mit dem kennzeichnenden Merkmal des Hauptanspruchs hat demgegenüber den Vorteil, daß beim Anschluß des Gerätes im Kraftfahrzeug der Platzbedarf für die innerhalb der Kontur des Gerätegehäuses vorgesehene Vorrichtung erheblich reduziert werden kann. Dies wird erreicht, indem nur eine separate Baugruppe außerhalb des Gerätegehäuses vorgesehen ist, welche direkt auf die Grundleiterplatte des Gerätes aufgesetzt wird.

Dabei ist zu berücksichtigen, daß bei handelsüblichen Geräten die Kontaktvorrichtungen zur Verbindung des Gerätes an einem Seitenteil des Gerätes vorgesehen sind, so daß die Geräteanschlüsse beim Einschieben des Gerätes in eine Konsole des Kraftfahrzeuges automatisch mit den Anschlußvorrichtungen des Kraftfahrzeugs verbunden werden. Die den Hauptschaltungsträger des Gerätes bildende Grundleiterplatte ist dabei im Gerät in der Regel parallel zur Einsteckrichtung der ersten Kontaktvorrichtungen in die Anschlußvorrichtungen des Kraftfahrzeugs ausgerichtet. Die Anschlüsse müssen daher von den ersten Kontaktvorrichtungen auf die Grundleiterplatte umgelenkt werden.

Bei der erfindungsgemäßen Vorrichtung stehen die für die Verbindung mit der Grundleiterplatte vorgesehenen zweiten Kontaktvorrichtungen in einer Richtung, die senkrecht zur Einsteckrichtung der ersten Kontaktvorrichtungen verläuft, von einer Seite der ersten Baugruppe ab. Hierdurch wird erreicht, daß die erste Baugruppe direkt auf die Grundleiterplatte aufgesetzt werden kann, wobei das Aufsetzen der ersten Baugruppe in einer Fertigungslinie auch automatisch durchgeführt werden kann. Eine Umleitung oder Umlenkung der elektrischen Anschlüsse über eine separat vorgesehene zweite Baugruppe mit Flachbahnleitungen, wie sie der Stand der Technik zur Verbindung der zweiten Kontaktvorrichtungen mit der Grundleiterplatte des Gerätes vorsieht, entfällt. Weitere Bauteile oder Distanzteile, sowie diese verbindende Klammern sind nicht erforderlich.

Weitere vorteilhafte Ausgestaltungen werden durch die in den Unteransprüchen beschriebenen Merkmale ermöglicht. Ein besonderer Vorteil ist darin zu sehen, daß die zweiten Kontaktvorrichtungen als Kontaktstifte ausgestaltet sind, die in auf der Grundleiterplatte vorgesehenen Durchkontaktierungslöcher einsteckbar und mit diesen im Wellenlötverfahren verlötbar sind. Durch die Verlötung der Kontaktvorrichtungen mit den Schaltungsteilen der Grundleiterplatte wird eine geringe Störanfälligkeit der Vorrichtung erreicht. Außerdem ist diese Anschlußtechnik in einer Wellenlötstation automatisch durchführbar.

Weiterhin vorteilhaft ist, wenn die Grundleiterplatte zugleich den Schaltungs- und Baugruppenträger des Gerätes bildet. Da dann im Gerät für die Schaltungsteile keine zusätzliche Leiterplatte erforderlich ist, können die Herstellungskosten weiter gesenkt werden.

Vorteilhaft ist außerdem, daß unabhängig von der Anzahl der Kontaktstifte, welche mit der Grundleiterplatte verbunden werden können, zusätzlich vorgesehene Anschlüsse als Flachbahnleitungen aus der ersten Baugruppe herausgeführt und in das Geräteinnere geleitet werden können.

### Zeichnung

Ein Ausführungsbeispiel der Erfindung ist in der Zeichnung dargestellt und wird in der nachfolgenden Beschreibung näher erläutert. Es zeigt
Fig. 1 die dem Kraftfahrzeug zugewandte Seite der ersten Baugruppe der Vorrichtung,
Fig. 2 die erste Baugruppe der Vorrichtung ohne die Leiterplatte, vom Autoradio aus gesehen,
Fig. 3 einen Schnitt durch die erste Baugruppe mit Leiterplatte entlang der in Fig. 1 mit I-I gekennzeichneten Linie,
Fig. 4 die Unterseite der ersten Baugruppe, welche auf die Grundleiterplatte aufgesetzt wird,
Fig. 5 einen Ausschnitt aus der Grundleiterplatte mit den zur Verbindung mit den Kontaktstiften vorgesehenen Kontaktvorrichtungen,
Fig. 6 ein weiteres Ausführungsbeispiel der ersten Baugruppe mit aus dem Rahmen herausgeführten Flachbahnleitungen,
Fig. 7 ein weiteres Ausführungsbeispiel der ersten Baugruppe mit insgesamt sechsunddreißig Kontaktstiften vom Autoradio aus gesehen.

### Beschreibung der Ausführungsbeispiele

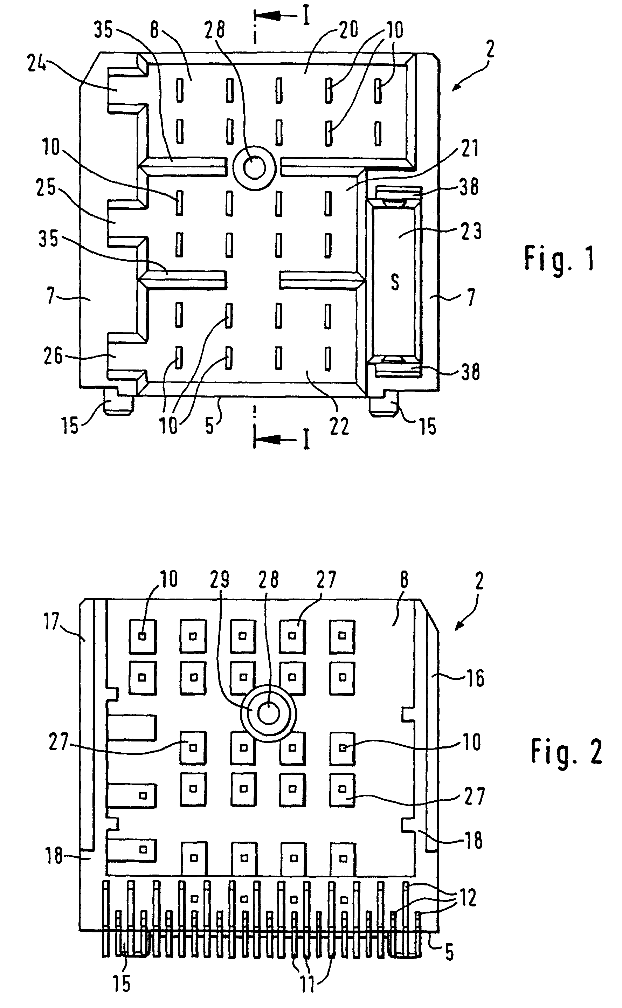

Die erfindungsgemäße Vorrichtung zum elektrischen Anschluß eines Gerätes, das z.B. ein Autoradio sein kann, in einem Kraftfahrzeug umfaßt zwei Baugruppen. Die erste Baugruppe 2 wird durch eine in etwa rechteckige Grundplatte 8 und einen diese umgebenden Rahmen 7 gebildet und weist erste und zweite Kontaktvorrichtungen 10 und 11 auf. Die zweite Baugruppe 3 wird durch eine Grundleiterplatte des Gerätes gebildet, welche an der Unterseite des Geräterahmens angeordnet ist. Die erste Baugruppe 2 ist als einstückiges Kunststoffspritzgußteil gefertigt und wird mit einer Schraube an einem in den Figuren 1 bis 6 nicht dargestellten Seitenteil des Geräterahmens befestigt. Das Seitenteil weist zweckmäßiger Weise eine Aussparung auf, in die die erste Baugruppe 2 eingesetzt werden kann, so daß sie innerhalb der quaderförmigen Kontur des Gerätes jedoch außerhalb des Gerätegehäuses liegt. In dem hier dargestellten Ausführungsbeipiel ist das Gerät ein Autoradio. Die erfindungsgemäße Vorrichtung kann aber ebensogut für den Anschluß eines Funkgerätes oder eines anderen mit dem Bordnetz zu verbindenden Gerätes benutzt werden.

Fig 1. zeigt eine Draufsicht auf die vom Autoradio abgewandte Seite der ersten Baugruppe 2. Der mit der Grundplatte 8 einstückig verbundene Rahmen 7 wird durch Stege 35 in Kammern 20,21,22 und 23 eingeteilt. Die in den Kammern enthaltenen ersten Kontaktvorrichtungen 10 sind als Flachkontakte ausgebildet und entsprechen in ihrer Anordnung der ISO-Norm. Die Flachkontakte 10 sind in der Grundplatte 8 des Spritzgußteiles 2 in ihrer Position fixiert und sind für den Anschluß der Betriebsspannung, der Antenne, der Lautsprecher und anderer im Kraftfahrzeug eingebauter Geräte vorgesehen. Im Rahmen 7 eingelassene Nuten 24,25 und 26 verhindern ein falsches Einsetzen von Steckkontakten in die Kammern 20,21 und 22. Die Kammer 23 ist zur Aufnahme einer Sicherung vorgesehen, die an den Nasen 38 befestigt werden kann bzw. von diesen geschützt wird. An der Unterseite 5 der Baugruppe 2 sind zwei Zapfen 15 zur Befestigung der Baugruppe 2 auf der Grundleiterplatte 3 des Gerätes vorgesehen.

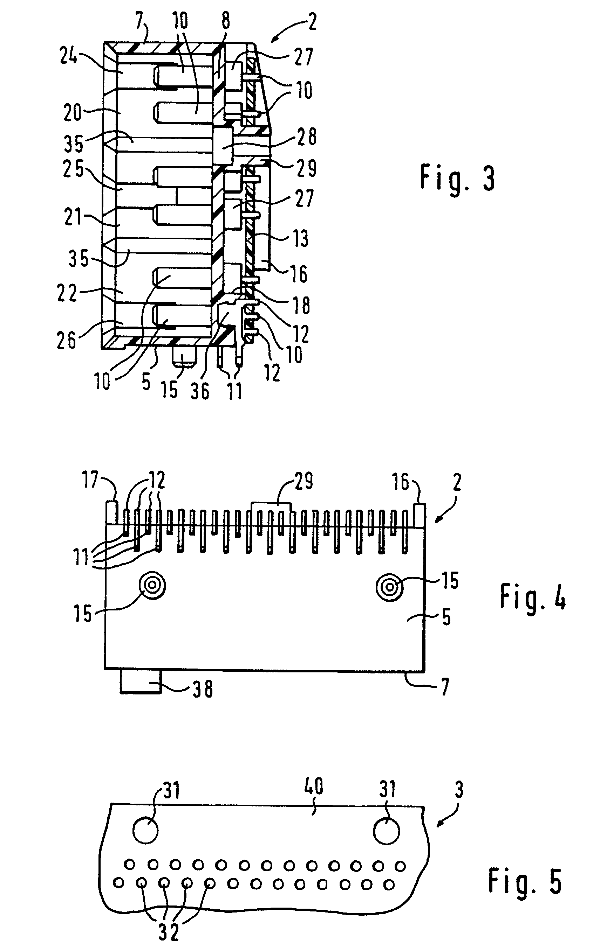

Fig. 2 zeigt eine Ansicht auf die dem Autoradio zugewandte Rückseite der ersten Baugruppe 2 ohne die Leiterplatte 13, welche die Grundplatte 8 verdecken würde. Fig. 2 zeigt einen weiterern schmalen, U-förmigen Rahmen 18, auf welchen die Leiterplatte 13 zwischen den Stegen 16 und 17 aufgelegt wird. Die in der Grundplatte 8 der Baugruppe 2 eingebetteten Flachkontakte 10 sind auf der in Fig. 2 dargestellten Rückseite der Baugruppe 2 in Form von dünnen Stiften aus einstückig mit der Grundplatte 8 verbundenen Sockeln 27 herausgeführt und stehen etwa 2 bis 3 mm von diesen ab. An der Unterseite 5 der Baugruppe 2 sind zweite Kontaktvorrichtungen 11 vorgesehen, die in Form von dünnen Kontaktstiften ausgestaltet sind und von der Unterseite 5 senkrecht abstehen. Die Kontaktstifte 11 sind wie die Flachkontakte 10 in die Baugruppe 2 eingeschweißt. Wie in Fig. 3 zu erkennen ist, sind die Kontaktstifte 11 über einen mit Widerhaken versehenen Zapfen 36 in der Grundplatte 8 verankert und weisen senkrecht von den Kontaktstiften 11 abstehende Lötfahnen 12 zur elektrischen Verbindung mit den auf der Leiterplatte 13 vorgesehenen Leiterbahnen auf. Wie in Fig. 3 dargestellt, ist in der Grundplatte 8 der Baugruppe 2 eine Bohrung 28 für eine nicht dargestellte Schraube zur Befestigung der ersten Baugruppe 2 an einem Seitenteil des Gerätegehäuses vorgesehen. Die Bohrung 28 ist mit einer Rundsäule 29 zur Führung der Schraube umgeben. Die in Fig. 3 dargestellte Leiterplatte 13 liegt auf dem Rahmen 18 auf und überdeckt die Grundplatte 8 mit den Sockeln 27. Die Rundsäule 29 ragt durch eine dafür in der Leiterplatte 13 vorgesehene Öffnung hindurch. Die stiftförmigen Enden der Flachkontakte 10 und die Lötfahnen 12 der Kontaktstifte 11 sind durch in der Leiterplatte vorgesehene Löcher geführt und mit den auf der Leiterplatte 13 vorgesehenen Leiterbahnen verlötet. Durch die nicht dargestellten Leiterbahnen der Leiterplatte 13 werden die Flachkontakte 10 über die Lötfahnen 12 mit den Kontaktstiften 11 elektrisch verbunden.

Fig. 4 zeigt eine Aufsicht auf die Unterseite 5 der Baugruppe 2 ohne die Leiterplatte 13. In dem hier dargestellten Ausführungsbeispiel bestehen die Kontaktvorrichtungen 11 aus insgesamt sechsundzwanzig Kontaktstiften, die in zwei Reihen angeordnet sind. Über die Leiterplatte 13 sind die sechsundzwanzig Kontaktstifte 11 mit den in Fig. 1 gezeigten sechsundzwanzig Klachkontakten 10 verbunden.

Die Fig. 5 zeigt einen Ausschnitt der Oberseite 40 der Grundleiterplatte 3 mit weiteren der Aufnahme der Kontaktstifte 11 dienenden Kontaktvorrichtungen 32, die als Durchkontaktierungen ausgestaltet sind und über auf der Grundleiterplatte 3 vorgesehene Leiterbahnen mit der Schaltung des Gerätes verbunden sind. Die Kontaktvorrichtungen 11 und 32 verhalten sich zueinander wie Stecker- und Gegensteckerleiste.

Zur Herstellung der elektrischen Anschlüsse wird die Baugruppe 2 mit der Unterseite 5 auf die Oberseite 40 der Grundleiterplatte 3 aufgesetzt, wobei die Zapfen 15 durch dafür vorgesehene Öffnungen 31 der Grundleiterplatte hindurchgeführt werden. Gleichzeitig werden die Kontaktstifte 11 durch die Durchkontaktierungslöcher 32 geführt. Die Aufbringung der Baugruppe 2 kann zum Beispiel mit einem Sonderbestücker automatisch durchgeführt werden. Anschließend werden die durch die Öffnungen 31 hindurchragenden Zapfen 15 auf der Unterseite der Grundleiterplatte 3 mit dieser verschweißt oder in anderer Weise verbunden. Die Grundleiterplatte 3 wird nun auf den Rahmen des Gerätegehäuses aufgesetzt und bildet dessen Unterseite. Die Baugruppe 2 wird dabei in eine Aussparung eingesetzt, welche in einem Seitenteil des quaderförmigen Gehäuserahmens vorgesehen ist. Anschließend wird die Baugruppe 2 mit einer durch die Öffnung 28 eingeführten Schraube mit dem Seitenteil des Gehäuserahmens verschraubt. Schließlich werden die Anschlüsse auf der vom Gerät abgewandten Seite der Grundleiterplatte 3 in einer Wellenlötstation verlötet. Dabei wird die Lötwelle über die gesamte Grundleiterplatte geführt, wobei die Kontaktstifte 11 mit den Durchkontaktierungen 32 verlötet werden. Auch dieser Schritt kann automatisch durchgeführt werden, wodurch die Herstellungskosten weiter gesenkt werden können.

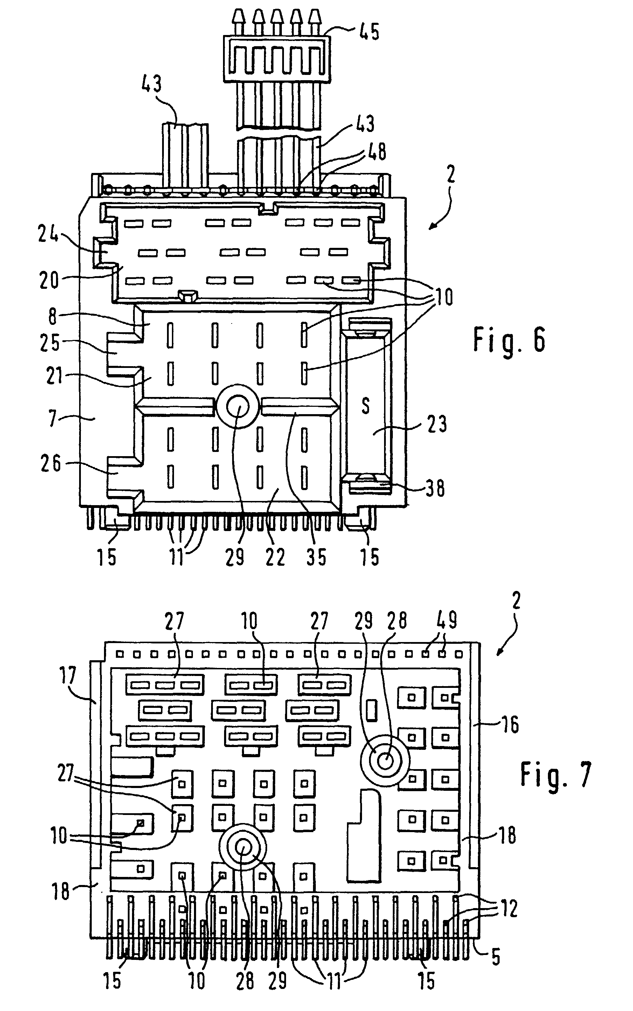

In Fig. 6 ist ein weiteres Ausführungsbeispiel der Erfindung dargestellt, das dem in Fig. 1 dargestellten Ausführungsbeispiel ähnelt. Bei dem in Fig. 6 gezeigten Ausführungsbeispiel sind aber außer den in Fig. 1 gezeigten sechsundzwanzig Anschlüssen, von denen zehn in der Kammer 20 angeordnet sind, in der Kammer 20 zehn weitere Flachkontakte zum Anschluß weiterer Einrichtungen vorgesehen. Insgesamt werden durch die Anschlußvorrichtung sechsunddreißig Anschlüsse im Kraftfahrzeug mit dem Gerät verbunden, wobei die Anordnung der Flachkontakte ebenfalls der ISO-Norm entspricht. Auf der dem Gerät zugewandten Seite der Baugruppe 2 sind nun außer den sechsundzwanzig Kontaktstiften 11 noch Flachbahnleitungen 43 vorgesehen, welche über die Leiterbahnen der Leiterplatte 13 mit den weiteren Flachkontakten 10 verbunden sind. Die Flachbahnleitungen 43 sind auf der Seite der Baugruppe 2, welcher der Unterseite 5 mit den Kontaktstiften 11 gegenüberliegt, mit der Leiterplatte 13 verlötet. Dabei sind die einzelnen Adern 48 der Flachbahnleitung 43 von der dem Kraftfahrzeug zugwandten Seite aus durch Öffnungen 49 zum Rahmen 18 und der Leiterplatte 13 hindurchgeführt. Das andere Ende der Flachbahnleitungen 43 ist an der Seite des Rahmens 7, welche der Unterseite 5 gegenüberliegt, aus dem Rahmen herausgeführt und weist jeweils eine Steckerleiste 45 auf. Dieses Ende der Flachbahnleitung 43 wird durch eine dafür vorgesehene Ausnehmungen des Gehäuserahmens in das Geräteinnere geführt und über die Steckerleisten 45 mit der Grundleiterplatte 3 des Gerätes verbunden. Die Flachbahnleitungen 43 können gleichzeitig mit den Kontaktstiften 11 im Wellenlötverfahren mit der Grundleiterplatte 3 verlötet werden, so daß alle elektrischen Anschlüsse zwischen der ersten Baugruppe 2 und der als Grundleiterplatte 3 ausgebildeten zweiten Baugruppe in einem Verfahrensschritt hergestellt werden können.

In Fig. 7 ist ein weiteres Ausführungsbeispiel der Erfindung von der dem Autoradio aus zugewandten Rückseite der ersten Baugruppe 2 dargestellt. Es handelt sich hier um ein sechsundvierzigpoliges Anschlußsystem. Wie in Fig. 7 gezeigt ist die Baugruppe 2 so erweitert, daß insgesamt sechsunddreißig Kontaktstifte in zwei Reihen für den Anschluß an die Geräteleiterplatte 3 vorhanden sind. Hierfür wird die Baugruppe 2 einfach seitlich vergrößert, so daß noch zehn weitere Kontaktstifte in den beiden Reihen auf der Unterseite 5 vorgesehen werden können. Die restlichen zehn Anschlüsse werden über Flachbahnleitungen 43, deren Adern durch die Öffnungen 49 mit der Leiterplatte 13 verbunden sind, ins Geräteinnere geführt. Die Baugruppe wird über zwei Schrauben, welche durch Öffnungen 28 geführt werden, mit dem Seitenteil des Geräterahmens verbunden. Für die sechsundvierzigpolige Ausführung der Anschlußvorrichtung, welche durch die seitliche Erweiterung eine größere Breite als die übrigen Ausführungsbeispiele aufweist, müssen die im Kraftfahrzeug vorgesehenen Anschlüsse in einer anderen Norm ausgestaltet sein.

## Patentansprüche

1. Vorrichtung zum elektrischen Anschluß eines Gerätes, insbesondere eines Autoradios, in einem Kraftfahrzeug, wobei eine erste Baugruppe (2) erste Kontaktvorrichtungen (10) und zweite Kontaktvorrichtungen (11) umfaßt, die mittels einer Leiterplatte (13) elektrisch verbunden sind, und wobei die ersten Kontaktvorrichtungen (10) in dafür vorgesehene Anschlußvorrichtungen des Kraftfahrzeugs einsteckbar sind und die zweiten Kontaktvorrichtungen (11) mit weiteren Kontaktvorrichtungen (32) einer zweiten Baugruppe (3) verbindbar sind, **dadurch gekennzeichnet**, daß als zweite Baugruppe (3) eine Grundleiterplatte vorgesehen ist und daß die zweiten Kontaktvorrichtungen (11) von einer Seite (5) der ersten Baugruppe (2) in einer Richtung senkrecht zur Einsteckrichtung der ersten Kontaktvorrichtungen (10) nach außen abstehen und in dieser Richtung mit den auf der Grundleiterplatte (3) vorgesehenen weiteren Kontaktvorrichtungen (32) verbindbar sind.

2. Vorrichtung nach Anspruch 1, **dadurch gekennzeichnet**, daß als zweite Kontaktvorrichtungen (11) Kontaktstifte vorgesehen sind, die in auf der Grundleiterplatte (3) als weitere Kontaktvorrichtungen (32) vorgesehene Durchkontaktierungslöcher einsteckbar und mit diesen im Wellenlötverfahren verlötbar sind.

3. Vorrichtung nach einem der Ansprüche 1 oder 2, **dadurch gekennzeichnet**, daß die Grundleiterplatte (3) zugleich den Hauptschaltungs- und Baugruppenträger des Gerätes (1) bildet.

4. Vorrichtung nach einem der Ansprüche 1 bis 3, **dadurch gekennzeichnet**, daß weitere mit der Leiterplatte (13) verbundene Anschlüsse als Flachbahnleitungen (43) aus der erste Baugruppe (2) herausgeführt und ins Geräteinnere geführt sind, die über Steckkontakte (45) mit der Grundleiterplatte (3) verbunden werden können.

## Claims

1. Apparatus for electrical connection of an appliance, in particular a car radio, in a motor vehicle, in which case a first assembly (2) comprises first contact apparatuses (10) and second contact apparatuses (11), which are electrically connected by means of a printed circuit board (13), and in which case the first contact apparatuses (10) can be plugged into connecting apparatuses provided for this purpose in the motor vehicle, and the second contact apparatuses (11) can be connected to further contact apparatuses (32) of a second assembly (3), characterized in that a motherboard is provided as the second assembly (3) and in that the second contact apparatuses (11) project outwards from one side (5) of the first assembly (2) in a direction at right angles to the insertion direction of the first contact apparatuses (10), and, in this direction, can be connected to the further contact apparatuses (32) provided on the motherboard (3).

2. Apparatus according to Claim 1, characterized in that contact pins are provided as the second contact apparatuses (11), which can be plugged into platedthrough holes provided as further contact apparatuses (32) on the motherboard (3), and can be soldered to these holes using a wave-soldering process.

3. Apparatus according to one of Claims 1 or 2, characterized in that the motherboard (3) also forms the main circuit base and the mounting base for the appliance (1).

4. Apparatus according to one of Claims 1 to 3, characterized in that further connections, which are connected to the printed circuit board (13), are routed as flat ribbon cables (43) out of the first assembly (2), are routed into the appliance interior, and can be connected to the motherboard (3) via plug contacts (45).

## Revendications

1. Dispositif de connexion électrique d'un appareil, notamment d'un autoradio dans un véhicule automobile, comprenant :
- un premier ensemble (2) avec des premiers organes de contact (10) et des seconds organes de contact (11) reliés électriquement par une plaque de circuit imprimé (13), et les premiers organes de contact (10) s'engagent dans des dispositifs de connexion prévus à cet effet dans le véhicule et les seconds dispositifs de contact (11) étant reliés à d'autres organes de contact (32) d'un second ensemble (3),
caractérisé en ce que
le second ensemble (3) est prévu comme plaque de circuit de base et les seconds organes de contact (11) sont en saillie à partir d'un premier côté (5) du premier ensemble (2) dans une direction perpendiculaire à la direction d'enfichage des premiers organes de contact (10), et dans cette direction ils peuvent être reliés à d'autres organes de contact (32) prévus sur la plaque de base (3).

2. Dispositif selon la revendication 1,
caractérisé en ce que
les seconds organes de contact (11) sont des broches de contact qui s'engagent dans des orifices de contact traversants constituant les autres organes de contact (32) de la plaque de base (3), en pouvant être soudées à ceux-ci par une opération de soudage à la vague.

3. Dispositif selon l'une des revendications 1 ou 2,
caractérisé en ce que
la plaque de base (3) est en même temps le support du circuit principal et le support des ensembles de l'appareil (1) .

4. Dispositif selon l'une des revendications 1 à 3,
caractérisé en ce que
d'autres branchements reliés à la plaque de circuit imprimé (13) sortent comme conducteurs plats (43) du premier ensemble (2) et pénètrent à l'intérieur de l'appareil en pouvant être reliés à la plaque de base (3) par des contacts d'enfichage (45) .
